# EUROPEAN PATENT APPLICATION

(11) **EP 2 990 386 A1**
(43) Date of publication of application: **02.03.2016**
(21) Application number: 14820665.9
(22) Date of filing: 01.07.2014
(51) Int. Cl.: C02F 9/00, B01D 61/02, B01D 61/04, C02F 1/44, C02F 1/70, C02F 1/72, C02F 3/06

(54) **WATER TREATMENT SYSTEM AND WATER TREATMENT METHOD**

(30) Priority: 03.07.2013 JP 2013140014
(71) Applicant: Mitsubishi Heavy Industries, Ltd., Tokyo 108-8215 (JP); Aqua Systems Limited, Takasago-shi, Hyogo 676-0021 (JP)
(72) Inventor: TABATA, Masayuki, Tokyo 108-8215 (JP); ITO, Yoshiaki, Tokyo 108-8215 (JP); MATSUI, Katsunori, Tokyo 108-8215 (JP); TOKUNAGA, Kiichi, Tokyo 108-8215 (JP); IKE, Takashi, Tokyo 108-8215 (JP); TAKEUCHI, Kazuhisa, Tokyo 108-8215 (JP); IWAHASHI, Hideo, Tokyo 108-8215 (JP); YASUNAGA, Takeshi, Tokyo 108-8215 (JP); KISHI, Masahiro, Takasago-shi Hyogo 676-0021 (JP)
(74) Representative: Henkel, Breuer & Partner
(86) International application number: PCT/JP2014/067540
(87) International publication number: WO 2015/002194

(57) **Abstract**

This water treatment system comprises: a reverse osmosis device (2); a biological membrane treatment device (4) that has a carrier on the surface of which a biological membrane is formed and that treats water to be treated (3) before passing through the reverse osmosis device (2); an oxidizing agent addition device (5) that adds an oxidizing agent to the water to be treated (3) at a stage before treatment with the biological membrane treatment device (4) or adds an oxidizing agent to the water to be treated (3) at a later stage after treatment with the biological membrane treatment device (4) and before treatment with the reverse osmosis device (2); and a reducing agent addition device (6) that neutralizes the oxidizing agent by adding a reducing agent to the early stage water to be treated (3) or the later stage water to be treated (3).

## Description

### [Technical Field]

The present invention relates to a water treatment system and a water treatment method, and more particularly, to a water treatment system and a water treatment method that are appropriate for use in the production of fresh water from seawater.

### [Background Art]

Desert regions, isolated islands, developing countries, industrial areas that require a large amount of fresh water, and so on, are examples of many regions in which a serious water shortage occurs chronically or seasonally as there is no fresh water source such as a river, a lake, or the like, and thus, a sufficient fresh water source is not available, or it is impossible to rely on rainwater due to climate characteristics. In parts of such regions, fresh water (drinking water) is produced by treating seawater, which is present in large quantities. As a method of producing fresh water, a method of filtering fresh water by passing seawater through a reverse osmosis membrane (a RO membrane) such as a hollow fiber membrane, a spiral membrane, or the like may be used.

Meanwhile, when fresh water is produced from seawater, the seawater needs to be pretreated before being passed through the reverse osmosis membrane. In the pretreatment, in general, in order to prevent biofouling by algae, shellfish, and so on, of a water intake port, a pipeline or a waterway configured to collect seawater, an oxidizing agent such as hypochlorous acid or the like is added. In addition, an inorganic coagulant such as ferric chloride or the like, or a polymer coagulant such as PAC or the like is added to an aggregate-suspended solid such as particulates, colloids, or the like in seawater, and filtered through a sand filter or a cartridge filter apparatus (CF) to remove the suspended solid in the seawater.

When a chlorine-based oxidizing agent remains, oxidation of the reverse osmosis membrane occurs, and thus, a decrease in membrane performance of the reverse osmosis membrane occurs. For this reason, before the seawater penetrates through the reverse osmosis membrane, a reducing agent such as sodium bisulfite (SBS) or the like is added while measuring an oxidation-reduction potential, to perform neutralization (for example, see Patent Literature 1).

When such pretreatment of seawater is performed, it is possible to prevent biofouling of the water intake port, the pipeline, the waterway, and so on, that are configured to collect the seawater, and early drop (fouling) of a membrane performance of the reverse osmosis membrane due to organism proliferation or silting of the suspended solid, and to efficiently and economically produce fresh water.

### [Citation List]

### [Patent Literature]

### [Patent Literature 1]

Japanese Unexamined Patent Application, First Publication No. 2008-296188

### [Summary of Invention]

### [Technical Problem]

The applicant has filed an application related to a water treatment technology (a technology of producing fresh water from seawater) using a biofilm treatment device (a biofilm filtration device) for forming biofilm on a surface of a media (a filter material) such as sand or the like, instead of a sand filter (Japanese Patent Application No. 2011-262507). In the biofilm treatment device, the microorganisms of the biofilm perform an important role in removal (capture, biodegradation) of the suspended solid in the seawater, and thus, filtration performance can be maintained. For this reason, in comparison with the water treatment system of the related art, fresh water can be more efficiently and economically produced without use of chemicals such as coagulant or the like.

However, even when the biofilm treatment device is used, in order to prevent the biofouling from algae, shellfish, and so on, in the water intake port, the pipeline or the waterway that are configured to collect the seawater, the oxidizing agent such as hypochlorous acid or the like should be added. In addition, the biofilm treatment device is used to treat the water to be treated that already contains chlorine, other than the seawater, is considered. As chlorine originating from such an oxidizing agent or the like is present, a decrease in activity of the biofilm (microorganism) of the biofilm treatment device or reduction in biofilm due to destruction occurs, and properties of the biofilm may not be maintained.

Due to the presence of an excessive reducing agent or a low molecular weight of the non-biodegradable organics biodegraded by the oxidizing agent, the microorganisms are repopulated in the reverse osmosis membrane device, and a decrease in membrane performance may occur due to closing of the reverse osmosis membrane.

### [Solution to Problem]

In order to achieve the aforementioned objects, a water treatment system according to a first aspect of the present invention including a reverse osmosis membrane device configured to separate water to be treated into concentrated water having a high solute concentration and fresh water, the water treatment system including: a biofilm treatment device comprising a media having biofilm formed on a surface thereof and configured to treat the water to be treated before passing through the reverse osmosis membrane device; an oxidizing agent addition device configured to add an oxidizing agent to the water to be treated of a pre-stage before treatment by the biofilm treatment device or the water to be treated of a post-stage before treatment by the reverse osmosis membrane device and after treatment by the biofilm treatment device; and a reducing agent addition device configured to add a reducing agent to the water to be treated of the pre-stage or the water to be treated of the post-stage to neutralize the oxidizing agent.

A water treatment method according to a second aspect of the present invention includes a fresh water separation process of separating water to be treated into concentrated water having a high solute concentration and fresh water by a reverse osmosis membrane; a biofilm treatment process of treating the water to be treated by biofilm formed on a surface of a media before passing through the reverse osmosis membrane; an oxidizing agent addition process of adding an oxidizing agent to the water to be treated of a pre-stage before treatment by the biofilm treatment process or the water to be treated of a post-stage before treatment by the fresh water separation process and after treatment by the biofilm treatment process; and a reducing agent addition process of adding a reducing agent to the water to be treated of the pre-stage or the water to be treated of the post-stage to neutralize the oxidizing agent.

In the water treatment system, a mixing device configured to mix the water to be treated to which at least one of the oxidizing agent and the reducing agent of the pre-stage or the post-stage is added may be provided.

In the water treatment method, a mixing process of mixing the water to be treated to which at least one of the oxidizing agent and the reducing agent of the pre-stage or the post-stage is added may be provided.

### [Advantageous Effects of Invention]

According to the present invention, in the water treatment system and the water treatment method, the oxidizing agent such as hypochlorous acid or the like is added (the oxidizing agent addition process) in the pre-stage before treatment or the post-stage after treatment by the biofilm treatment device (the biofilm treatment process), the microorganisms or the like in the water to be treated are destroyed, and for example, the organisms such as algae, shellfish, or the like, can be prevented from sticking to a water intake port, a pipeline, a waterway, and so on that are configured to collect the seawater or the like serving as the water to be treated. Further, in the pre-stage before treatment or the post-stage after treatment by the biofilm treatment device, as the reducing agent such as SBS or the like is added after adding the oxidizing agent (the reducing agent addition process), the previously added oxidizing agent can be neutralized.

When the oxidizing agent and the reducing agent are added in the pre-stage before treatment by the biofilm treatment device, a decrease in activity of the biofilm (microorganism) of the biofilm treatment device or reduction of the biofilm due to destruction does not occur. For this reason, properties of the biofilm (and a filtration performance of biofilm treatment device) can be maintained, and the water to be treated can be securely and effectively treated without using a coagulant. In addition, the water to be treated to which the oxidizing agent and the reducing agent are added is supplied to the reverse osmosis membrane of the reverse osmosis membrane device. For this reason, the membrane performance of the reverse osmosis membrane can be precisely maintained to treat the water to be treated (fresh water separation process), i.e., produce fresh water without the remaining oxidizing agent oxidizing the reverse osmosis membrane. Further, when the oxidizing agent and the reducing agent are added in the pre-stage the pre-stage before treatment by the biofilm treatment device, the low molecular organic material or the like generated from the non-biodegradable organics by the oxidizing agent can be biodegraded and removed by the biofilm treatment device. For this reason, the fouling of the reverse osmosis membrane (the reverse osmosis membrane device) of the post-stage can be effectively reduced.

When the oxidizing agent and the reducing agent are added in the post-stage before treatment by the reverse osmosis membrane device and after treatment by the biofilm treatment device, the microorganisms or the like in the water to be treated can be biodegraded and removed by the oxidizing agent. Since the oxidizing agent is added in the post-stage after treatment by the biofilm treatment device, a decrease in activity of the biofilm or reduction of the biofilm due to destruction does not occur. For this reason, the properties of the biofilm (and the filtration performance of biofilm treatment device) can be maintained, and the water to be treated can be precisely and effectively treated without using a coagulant.

When the oxidizing agent and the reducing agent are added in the post-stage before treatment by the reverse osmosis membrane device and after treatment by the biofilm treatment device, the water to be treated in which the oxidizing agent is neutralized by the reducing agent is supplied to the reverse osmosis membrane. For this reason, the membrane performance of the reverse osmosis membrane can be precisely maintained to treat the water to be treated, i.e., produce fresh water without the remaining oxidizing agent oxidizing the reverse osmosis membrane.

In the water treatment system and the water treatment method, as the water to be treated to which at least one of the oxidizing agent and the reducing agent is added is mixed (the mixing process) in the pre-stage of treatment of the water to be treated by the biofilm treatment device (the biofilm treatment process) or the post-stage before treatment of the water to be treated by the reverse osmosis membrane device or after treatment by the biofilm treatment device, the effect of the oxidizing agent and the effect of the reducing agent can be securely exhibited. Accordingly, the membrane performance of the biofilm and the membrane performance of the reverse osmosis membrane can be more precisely and effectively maintained.

### [Brief Description of Drawings]

Fig. 1 is a view showing a water treatment system (and a water treatment method) according to an embodiment of the present invention.
Fig. 2 is a view showing a variant of the water treatment system (and the water treatment method) according to the embodiment of the present invention.

### [Description of Embodiments]

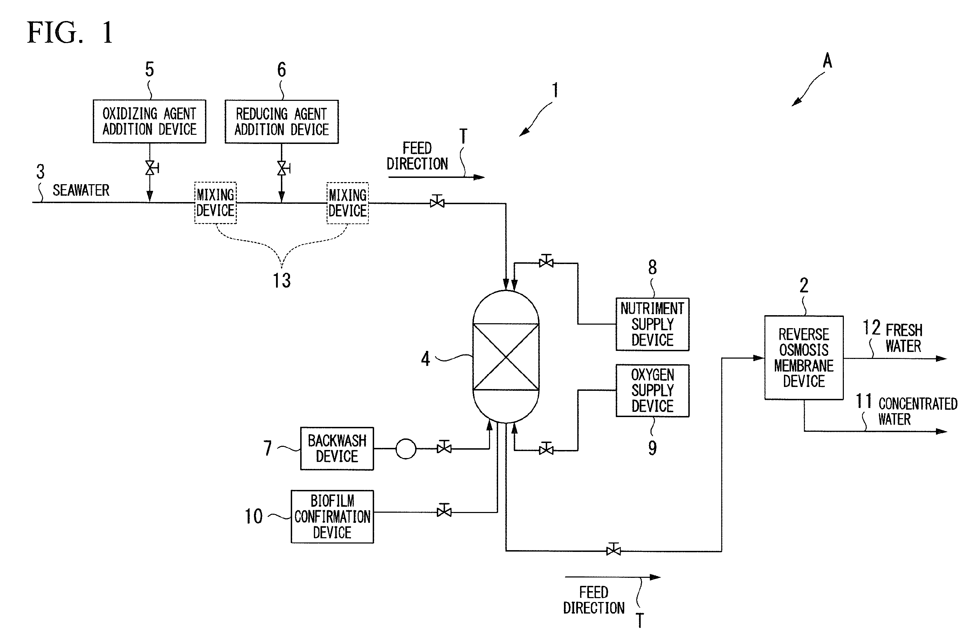

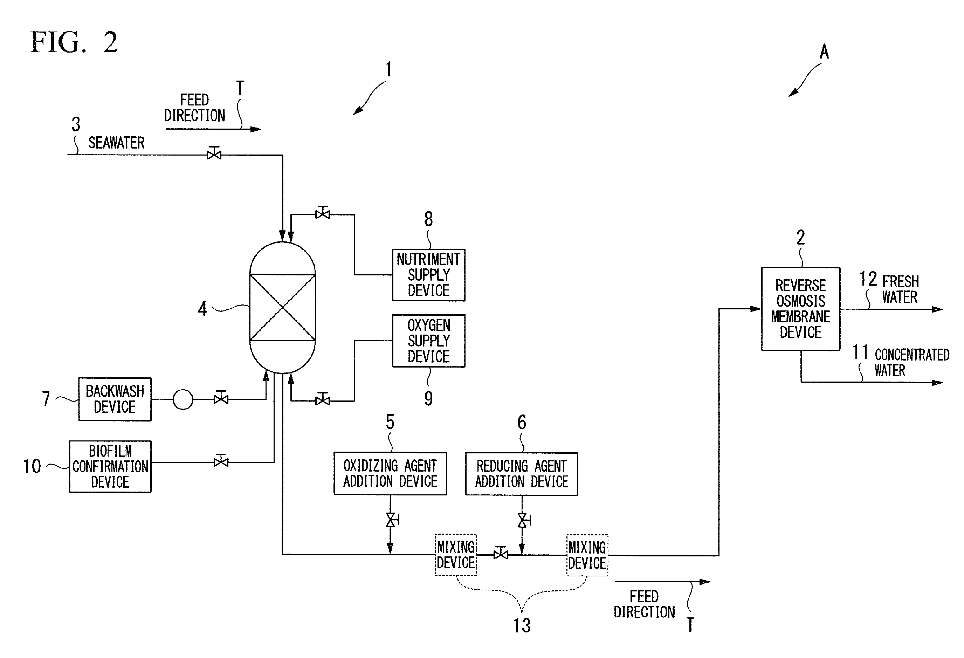

Hereinafter, a water treatment system and a water treatment method according to the embodiment of the present invention will be described with reference to Figs. 1 and 2. Here, in the embodiment, the water treatment system and the water treatment method according to the present invention will be described as a system and a method that uses seawater serving as water to be treated. And the system and the method configured to separate the seawater into concentrated water and fresh water using a reverse osmosis membrane (a RO membrane) to produce fresh water. Further, the water to be treated according to the present invention does not need to be limited to seawater.

As shown in Fig. 1 (and Fig. 2), a water treatment system A of the embodiment includes a pretreatment apparatus 1 and a reverse osmosis membrane device (RO membrane device) 2.

The pretreatment apparatus 1 removes suspended solids such as particulates, colloids, or the like, in the seawater 3, and microorganisms such as algae, shellfish, or the like, in the seawater 3. The pretreatment apparatus 1 is configured to prevent the organisms such as algae, shellfish, or the like, from adhering to the water intake port, the pipeline, the waterway, and so on that are configured to collect the seawater 3 serving as the water to be treated. Further the pretreatment apparatus 1 is configured to suppress a fouling phenomenon in which water permeability of the reverse osmosis membrane device 2 is decreased.

The pretreatment apparatus 1 of the embodiment includes a biofilm treatment device 4 including a media having a biofilm formed on a surface of the media, an oxidizing agent addition device 5 configured to add an oxidizing agent such as hypochlorous acid or the like to the seawater 3, and a reducing agent addition device 6 configured to add a reducing agent such as sodium bisulfite (SBS) or the like while measuring an oxidation-reduction potential. The reducing agent addition device 6 configured to neutralize the oxidizing agent.

In addition, the biofilm treatment device 4 is disposed forward in a feed direction T (upstream in a distribution direction) of the seawater 3 from the reverse osmosis membrane device 2 to treat the seawater 3 before passing through the reverse osmosis membrane device 2.

Further, the biofilm treatment device (the biofilm filtration device) 4 is configured by filling a pressure vessel with medias such as sand or the like on the surface of which the biofilm is formed. Accordingly, the biofilm treatment device (the biofilm filtration device) 4 has a filtration performance in addition to a biodegradation and removal performance of a BOD element by the biofilm. In addition, the biofilm treatment device 4 of the embodiment includes a backwash device 7 such as a backwash pump or the like configured to recover the filtration performance using backwash. Further, the biofilm treatment device 4 includes a nutriment supply device 8 configured to appropriately supply nutriment such as nitrogen, phosphorus, or the like, and an oxygen supply device 9 configured to supply oxygen are provided. The nutriment supply device 8 and the oxygen supply device 9 are configured to appropriately form the biofilm on the surface of the media and maintain the appropriately formed biofilm. In addition, the biofilm treatment device 4 includes a biofilm confirmation device 10 configured to confirmed the amount or state of the biofilm by appropriately selectively, and regularly or non-regularly or continuously measuring a silt density index (SDI), a silting index (SI), a dirt index (FI), a dissolved oxygen content (DO), turbidity of backwash drainage, a chemical oxygen demand (COD) of an inlet and an outlet of the apparatus, a biochemical oxygen demand (BOD), and so on.

As shown in Fig. 1, the oxidizing agent addition device 5 is disposed forward in the feed direction T of the seawater 3 from the biofilm treatment device 4 to add an oxidizing agent to the seawater 3 of a pre-stage which is the preceding step of treatment by the biofilm treatment device 4. In addition, the reducing agent addition device 6 is disposed between the biofilm treatment device 4 and the oxidizing agent addition device 5 to add a reducing agent to the seawater 3 of the pre-stage before treatment by the biofilm treatment device 4 and add the reducing agent to the seawater 3 after adding the oxidizing agent. That is, the reducing agent addition device 6 is disposed forward in the feed direction T of the seawater 3 from the biofilm treatment device 4 and rearward in the feed direction T of the seawater 3 from the oxidizing agent addition device 5.

Meanwhile, as shown in Fig. 2, the oxidizing agent addition device 5 may be disposed between the biofilm treatment device 4 and the reverse osmosis membrane device 2 to add the oxidizing agent to the seawater 3 of a post-stage which is the preceding step of treatment by the reverse osmosis membrane device 2 and is the later step of treatment by the biofilm treatment device 4. That is, the oxidizing agent addition device 5 may be disposed rearward in the feed direction T of the seawater 3 from the biofilm treatment device 4 and forward in the feed direction T of the seawater 3 from the reverse osmosis membrane device 2.

In this case, the reducing agent addition device 6 is disposed between the oxidizing agent addition device 5 and the reverse osmosis membrane device 2 to add the reducing agent to the seawater 3 after adding the oxidizing agent and add the reducing agent to the seawater 3 before treatment by the reverse osmosis membrane device 2. That is, the reducing agent addition device 6 is disposed rearward in the feed direction T of the seawater 3 from the oxidizing agent addition device 5 and closer to the forward side in the feed direction T of the seawater 3 than the reverse osmosis membrane device 2.

The reverse osmosis membrane device 2 includes, for example, a plurality of reverse osmosis membrane elements (reverse osmosis membrane modules) installed in a pressure vessel. In the reverse osmosis membrane device 2, the seawater 3 treated by the pretreatment apparatus 1 is supplied to the reverse osmosis membrane elements, and the seawater 3 is separated into concentrated water 11 and fresh water 12 by the reverse osmosis membranes of the reverse osmosis membrane elements to be discharged from the pressure vessel. Accordingly, the fresh water 12 is produced. Further, the water treatment system A may be configured to send the concentrated water 11 to an electrodialysis apparatus or an evaporator, in order to generate sodium chloride or bittern, and extract and collect potassium, bromine, boron, and so on, contained in the seawater 3 as valuables.

When the fresh water 12 is produced from the seawater 3 using the water treatment system A of the embodiment having the above-mentioned configuration (in a water treatment method of the embodiment), as shown in Fig. 1, the seawater 3 that is raw water serving as the water to be treated is collected. After that, in the pre-stage before supplying the seawater 3 to the biofilm treatment device 4, first, the oxidizing agent is added to the seawater 3 by the oxidizing agent addition device 5 (an oxidizing agent addition process). The microorganisms or the like in the seawater 3 are extinct by adding the oxidizing agent, and then the organisms such as algae, shellfish, or the like, are prevented from sticking to the water intake port, the pipeline, the waterway, and so on.

In the pre-stage before supplying the seawater to the biofilm treatment device 4, the reducing agent is added to the seawater 3 to which the oxidizing agent was added by the reducing agent addition device 6 (a reducing agent addition process). As the reducing agent is added, the oxidizing agent remaining in the seawater 3 is neutralized. Here, as the reducing agent is added while the oxidation-reduction potential is measured, excessive addition of the reducing agent is prevented.

The seawater 3 treated by adding the oxidizing agent and the reducing agent is sent to the biofilm treatment device 4. The microorganisms of the biofilm formed on the surface of the media of the biofilm treatment device 4 are removed by supplementing or biodegrading the suspended solids or the like (BOD) in the seawater 3. In addition, a low molecular organic material or the like generated from the non-biodegradable organics by the oxidizing agent added in the pre-stage is also biodegraded and removed by the biofilm treatment device 4. Further, the biofilm treatment device 4 fills the pressure vessel with the media having the biofilm formed on the surface thereof, and has the filtration performance. For this reason, in the biofilm treatment device 4, in addition to the removal performance of the suspended solids by the microorganisms of the biofilm, even when the seawater 3 passes through the inside of the pressure vessel of the biofilm treatment device 4 to be filtered, the suspended solids in the seawater 3 are removed. Accordingly, treatment of the seawater 3 can be performed without adding the coagulant like the related art (a biofilm treatment process).

Here, in the pre-stage before supplying the seawater to the biofilm treatment device 4 and treating the seawater, the oxidizing agent in the seawater 3 is neutralized by the reducing agent. For this reason, a decrease in activity of the microorganisms of the biofilm does not occur due to the oxidizing agent, and a decrease in biofilm due to extinction does not occur. For this reason, the membrane performance of the biofilm is securely exhibited, and the seawater 3 can be appropriately pretreated.

The seawater 3 treated by the biofilm treatment device 4 is supplied into the reverse osmosis membrane device 2 as described above, and the seawater 3 is separated into the concentrated water 11 and the fresh water 12 by the reverse osmosis membrane to produce fresh water 12 (a fresh water separation process). Here, since the oxidizing agent is already neutralized by the reducing agent, a decrease in membrane performance of the reverse osmosis membrane due to the remaining oxidizing agent oxidizing the reverse osmosis membrane does not occur.

In addition, since the low molecular organic material or the like generated from the non-biodegradable organics by the oxidizing agent added in the pre-stage is biodegraded and removed by the biofilm treatment device 4, a decrease in membrane performance of the reverse osmosis membrane (a fouling phenomenon) is precisely and effectively limited.

Meanwhile, when the water treatment system A is configured as shown in Fig. 2, the seawater 3 of the raw water serving as the water to be treated is collected. After that, the suspended solids, the microorganisms, and so on in the seawater are captured, biodegraded and removed by the biofilm of the biofilm treatment device 4riyou and further removed using the filtration performance of the biofilm treatment device 4 (a biofilm treatment process).

Next, the oxidizing agent is added to the seawater 3 after treatment in the biofilm treatment device 4 by the oxidizing agent addition device 5 (an oxidizing agent addition process). Accordingly, the suspended solids, the microorganisms, or the like in the seawater 3 that are remained after treatment by the biofilm treatment device (biofilm) 4 are biodegraded and removed. For this reason, when the oxidizing agent is added after treatment by the biofilm treatment device 4 as shown in Fig. 2, a medicine dose of the oxidizing agent can be reduced.

When the oxidizing agent is added in the post-stage after treatment by the biofilm treatment device 4 in this way, the properties of the biofilm (and the filtration performance of biofilm treatment device) are securely and appropriately maintained with high precision without a decrease in activity of the biofilm of the biofilm treatment device 4 originating from the oxidizing agent or a reduction in biofilm due to the destruction originating from the oxidizing agent.

Next, the reducing agent is added by the reducing agent addition device 6 to the seawater 3 of the post-stage before treatment by the reverse osmosis membrane device 2 and after treatment by the biofilm treatment device 4 and the oxidizing agent addition device (oxidizing agent) 5 (a reducing agent addition process). Accordingly, the oxidizing agent remaining in the seawater 3 is neutralized by the reducing agent.

As the seawater 3 treated by the biofilm treatment device 4, the oxidizing agent addition device 5 and the reducing agent addition device 6 is supplied to the reverse osmosis membrane device 2 in this way. The seawater 3 is separated into the concentrated water 11 and the fresh water 12 by the reverse osmosis membrane to produce fresh water 12 (a fresh water separation process). Here, since the oxidizing agent is already neutralized by the reducing agent, a decrease in membrane performance of the reverse osmosis membrane due to oxidation of the reverse osmosis membrane by the remaining oxidizing agent does not occur. In addition, since the suspended solids, the microorganisms, and so on in the seawater 3 are sufficiently removed by the biofilm treatment device 4 and the oxidizing agent, a decrease in membrane performance (a fouling phenomenon) of the reverse osmosis membrane is precisely and effectively suppressed.

Accordingly, in the water treatment system A and the water treatment method of the embodiment, since the oxidizing agent such as hypochlorous acid or the like is added in the pre-stage before treatment or the post-stage after treatment by the biofilm treatment device 4 (an oxidizing agent addition process), the microorganisms or the like in the seawater 3 of the water to be treated are destroyed, and the organisms such as algae, shellfish, or the like can be prevented from sticking to the water intake port, the pipeline, the waterway, and so on that are configured to collect the seawater 3. Further, in the pre-stage before treatment or the post-stage after treatment by the biofilm treatment device 4, as the reducing agent such as SBS or the like is added after adding the oxidizing agent (a reducing agent addition process), the previously added oxidizing agent can be neutralized.

When the oxidizing agent and the reducing agent are added in the pre-stage before treatment by the biofilm treatment device 4, a decrease in activity of the biofilm (microorganism) of the biofilm treatment device 4 and reduction of biofilm due to the destruction does not occur. For this reason, the properties of the biofilm (and the filtration performance of biofilm treatment device) can be maintained, and the water to be treated can be securely and effectively treated without using the coagulant. In addition, the seawater 3 to which the oxidizing agent and the reducing agent are added is supplied to the reverse osmosis membrane of the reverse osmosis membrane device 2. For this reason, the membrane performance of the reverse osmosis membrane can be precisely maintained to treat the seawater 3, i.e., produce fresh water 12 without the remaining oxidizing agent oxidizing the reverse osmosis membrane (a fresh water separation process). Further, when the oxidizing agent and the reducing agent are added in the pre-stage before treatment by the biofilm treatment device 4, the low molecular organic material or the like generated from the non-biodegradable organics by the oxidizing agent can be biodegraded and removed by the biofilm treatment device 4. For this reason, the fouling of the reverse osmosis membrane (the reverse osmosis membrane device 2) of the post-stage can be effectively suppressed.

When the oxidizing agent and the reducing agent are added in the post-stage before treatment by the reverse osmosis membrane device 2 and after treatment by the biofilm treatment device 4, the microorganisms or the like in the seawater 3 can be biodegraded and removed by the oxidizing agent. Since the oxidizing agent is added in the post-stage after treatment by the biofilm treatment device 4, the properties of the biofilm (and the filtration performance of biofilm treatment device) can be maintained without a decrease in activity of the biofilm and reduction of the biofilm due to the destruction, and the seawater 3 can be precisely and effectively treated without using the coagulant. In addition, when the oxidizing agent and the reducing agent are added in the post-stage before treatment by the reverse osmosis membrane device 2 and after treatment by the biofilm treatment device 4, the seawater 3 in which the oxidizing agent is neutralized by the reducing agent is supplied to the reverse osmosis membrane. For this reason, the membrane performance of the reverse osmosis membrane can be precisely maintained to treat the seawater 3 and produce fresh water 12 without the remaining oxidizing agent oxidizing the reverse osmosis membrane.

While the embodiment of the water treatment system and the water treatment method according to the present invention has been described above, the present invention is not limited to the above-mentioned embodiment but may be appropriately varied without departing from the spirit of the present invention.

For example, as shown by broken lines in Figs. 1 and 2, the water treatment system A is configured to include a mixing device 13 configured to mix the water to be treated 3 to which any one of the oxidizing agent and the reducing agent is added (a mixing process) in the pre-stage before treatment of the water to be treated 3 by the biofilm treatment device 4 (the biofilm treatment process) or in the post-stage before treatment of the water to be treated 3 by the reverse osmosis membrane device 2 and after treatment by the biofilm treatment device 4. In this case, in addition to the effects of the above-mentioned embodiment, the added oxidizing agent or reducing agent can be securely mixed with the water to be treated 3 at an early stage by the mixing device 13 (the mixing process). For this reason, the effects of the oxidizing agent and the reducing agent can be securely exhibited. Accordingly, the membrane performance of the biofilm and the membrane performance of the reverse osmosis membrane can be more precisely and effectively maintained.

### [Industrial Applicability]

According to the water treatment system and the water treatment method, the oxidizing agent such as hypochlorous acid or the like is added (the oxidizing agent addition process) in the pre-stage before treatment or the post-stage after treatment by the biofilm treatment device (the biofilm treatment process), the microorganisms or the like in the water to be treated are destroyed, and for example, the organisms such as algae, shellfish, or the like can be prevented from sticking to the water intake port, the pipeline, the waterway, and so on that are configured to collect the seawater or the like serving as the water to be treated.

### [Reference Signs List]

1 pretreatment apparatus
2 reverse osmosis membrane device (RO membrane device)
3 seawater (water to be treated)
4 biofilm treatment device (biofilm filtration device)
5 oxidizing agent addition device
6 reducing agent addition device
7 backwash device
8 nutriment supply device
9 oxygen supply device
10 biofilm confirmation device
11 concentrated water
12 fresh water
13 mixing device
A water treatment system
T feed direction of water to be treated (distribution direction)

## Claims

1. A water treatment system comprising a reverse osmosis membrane device configured to separate water to be treated into concentrated water having a high solute concentration and fresh water, the water treatment system comprising:
a biofilm treatment device comprising a media having biofilm formed on a surface thereof and configured to treat the water to be treated before passing through the reverse osmosis membrane device;
an oxidizing agent addition device configured to add an oxidizing agent to the water to be treated of a pre-stage before treatment by the biofilm treatment device or the water to be treated of a post-stage before treatment by the reverse osmosis membrane device and after treatment by the biofilm treatment device; and
a reducing agent addition device configured to add a reducing agent to the water to be treated of the pre-stage or the water to be treated of the post-stage to neutralize the oxidizing agent.

2. The water treatment system according to claim 1, further comprising a mixing device configured to mix the water to be treated to which at least one of the oxidizing agent and the reducing agent of the pre-stage or the post-stage is added.

3. A water treatment method comprising:
a fresh water separation process of separating water to be treated into concentrated water having a high solute concentration and fresh water by a reverse osmosis membrane;
a biofilm treatment process of treating the water to be treated by biofilm formed on a surface of a media before passing through the reverse osmosis membrane;
an oxidizing agent addition process of adding an oxidizing agent to the water to be treated of a pre-stage before treatment by the biofilm treatment process or the water to be treated of a post-stage before treatment by the fresh water separation process and after treatment by the biofilm treatment process; and
a reducing agent addition process of adding a reducing agent to the water to be treated of the pre-stage or the water to be treated of the post-stage to neutralize the oxidizing agent.

4. The water treatment method according to claim 3, further comprising a mixing process of mixing the water to be treated to which at least one of the oxidizing agent and the reducing agent of the pre-stage or the post-stage is added.

## Amended claims

### Amended claims under Art. 19.1 PCT

**1.** Currently Amended) A water treatment system comprising a reverse osmosis membrane device configured to separate water to be treated into concentrated water having a high solute concentration and fresh water, the water treatment system comprising:
a biofilm treatment device comprising a media having biofilm formed on a surface thereof and configured to treat the water to be treated before the water passes through the reverse osmosis membrane device;
an oxidizing agent addition device configured to add an oxidizing agent to the water to be treated of a pre-stage before treatment by the biofilm treatment device or the water to be treated of a post-stage before treatment by the reverse osmosis membrane device and after treatment by the biofilm treatment device; and
a reducing agent addition device configured to add a reducing agent to the water to be treated of the pre-stage when the oxidizing agent addition device adds the oxidizing agent to the water to be treated of the pre-stage before treatment by the biofilm treatment device, or add a reducing agent to the water to be treated of the post-stage when the oxidizing agent addition device adds the oxidizing agent to the water to be treated of the post-stage before treatment by the reverse osmosis membrane device and after treatment by the biofilm treatment device to neutralize the oxidizing agent.

**2.** Original) The water treatment system according to claim 1, further comprising a mixing device configured to mix the water to be treated to which at least one of the oxidizing agent and the reducing agent of the pre-stage or the post-stage is added.

**3.** Currently Amended) A water treatment method comprising:
a fresh water separation process of separating water to be treated into concentrated water having a high solute concentration and fresh water by a reverse osmosis membrane;
a biofilm treatment process of treating the water to be treated by biofilm formed on a surface of a media before the water passes through the reverse osmosis membrane;
an oxidizing agent addition process of adding an oxidizing agent to the water to be treated of a pre-stage before treatment by the biofilm treatment process or the water to be treated of a post-stage before treatment by the fresh water separation process and after treatment by the biofilm treatment process; and
a reducing agent addition process of adding a reducing agent to the water to be treated of the pre-stage when the oxidizing agent addition device adds the oxidizing agent to the water to be treated of the pre-stage before treatment by the biofilm treatment device, or adding a reducing agent to the water to be treated of the post-stage when the oxidizing agent addition device adds the oxidizing agent to the water to be treated of the post-stage before treatment by the reverse osmosis membrane device and after treatment by the biofilm treatment device to neutralize the oxidizing agent.

**4.** Original) The water treatment method according to claim 3, further comprising a mixing process of mixing the water to be treated to which at least one of the oxidizing agent and the reducing agent of the pre-stage or the post-stage is added.

Statement under Art. 19.1 PCT
Claim 1 and Claim 3 of CLAIMS are amended as in the attachment.

The amendments of Claim 1 and Claim 3 are based on paragraphs [0024] to [0026] of the description at the time the application was filed. Therefore, no new matter has been added by the Amendments.

According to these amendments, in the present invention, it is apparent that a target to which the oxidizing agent and the reducing agent are added is the water to be treated of the pre-stage before treatment by the biofilm treatment device (the organism treatment process) or the water to be treated of the post-stage before treatment by the reverse osmosis membrane device (the fresh water separation process) and after treatment by the biofilm treatment device.

In the present invention, when the oxidizing agent and the reducing agent are added in the pre-stage before treatment by the biofilm treatment device (the organism treatment process), a decrease in activity of the biofilm (microorganism) of the biofilm treatment device or reduction of the biofilm due to destruction does not occur. In addition, when the oxidizing agent and the reducing agent are added in the post-stage before treatment by the reverse osmosis membrane device and after treatment by the biofilm treatment device, the microorganisms or the like in the water to be treated can be biodegraded and removed by the oxidizing agent. For this reason, as the oxidizing agent is added in the post-stage after treatment by the biofilm treatment device, a decrease in activity of the biofilm or reduction of the biofilm due to destruction does not occur. Accordingly, in any case, properties of the biofilm (and filtration performance of biofilm treatment device) can be maintained, and the water to be treated can be treated without using the coagulant.
